# EUROPÄISCHE PATENTSCHRIFT

(11) **EP 0 358 854 B1**
(45) Veröffentlichungstag und Bekanntmachung des Hinweises auf die Patenterteilung: **07.01.1993**
(21) Anmeldenummer: 89110505.8
(22) Anmeldetag: 10.06.1989
(51) Int. Cl.: B65G 21/02, B65G 21/06

(54) **Rahmen für Bandfördervorrichtung**
Frame for a belt conveyor
Cadre pour transporteur à bande

(30) Priorität: 06.09.1988 DE 3830212
(43) Veröffentlichungstag der Anmeldung: 21.03.1990
(73) Patentinhaber: Geppert, Helmut, Dipl.-Ing., 52382 Niederzier-Krauthausen (DE)
(72) Erfinder: Geppert, Helmut, Dipl.-Ing., 52382 Niederzier-Krauthausen (DE)
(74) Vertreter: Liermann, Manfred

(56) Entgegenhaltungen:
- EP-A- 0 026 754
- EP-A- 0 036 958
- EP-A- 0 123 785
- US-A- 3 650 377

## Beschreibung

Die Erfindung betrifft einen Rahmen für eine Bandfördervorrichtung mit zwei im Abstand gegenüberliegenden, zueinander parallel verlaufenden Längsholmen, mit mindestens einer von einem zwischen den Längsholmen angeordneten Zwischenstück gebildeten Gleitebene für das Förderband, wobei die Längsholme mittels mindestens einer Quertraverse miteinander verbunden sind und eine in Längsrichtung verlaufende regelmäßige Lochung aufweisen.

Rahmen für Bandfördervorrichtungen der o.gen. Art sind beispielsweise bekannt geworden mit der DE-OS 3409160. Der Entwicklung dieser Einrichtung lag bereits das Ziel zugrunde einen einfachen, preiswerten und schnell montierbaren Rahmen für Bandfördervorrichtungen der eingangs beschriebenen Art zu schaffen. Dieses Ziel wurde auch erreicht. Dennoch kann nicht übersehen werden, daß eine schnelle, also eine kurzfristige Lieferung von Bandfördervorrichtungen mit solchen Rahmen nur möglich ist, wenn die Einzelteile des Rahmens vorgefertigt am Lager auf Vorrat gehalten werden. Die vorgefertigten Teile sind jedoch realtiv sperrig und nehmen daher bei der Lagerung ungünstig viel Raum in Anspruch. Darüber hinaus ist es nicht möglich den als Schlürblech ausgebildeten Mittelteil vorzufertigen, weil ja die exakte und vom Kunden gewünschte Breite des Bandes, die von der Breite des Schlürbleches mitbestimmt wird, nicht vorbekannt ist. Das als Mittelteil ausgebildete Schlürblech kann also immer nur von Bestellung zu Bestellung angefertigt werden, wodurch die Lieferzeiten länger werden, wodurch sich die Konkurrenzfähigkeit des Lieferers verschlechtert.

Da bei der bekannten Ausführung darüber hinaus das Schlürblech beidseitig mit den Längsholmen verschraubt wird, muß einerseits wegen der Verschraubung ein erhöhter Montageaufwand hingenommen werden und es muß andererseits der Lochabstand für die Verschraubung an Schlürblech und an Längsholm exakt übereinstimmen. Werden in einem solchen Fall starre Quertraversen verwendet, so ist eine besonders präzise maßliche Abstimmung aller Bauteile erforderlich um eine unerwünschte Verspannung der miteinander verschraubten Bauteile zu vermeiden. Dies aber erzwingt einen erhöhten fertigungstechnischen Aufwand.

Zur weiteren Vereinfachung ist mit dem DE-G 83 10 752 auch schon vorgeschlagen worden, bei Bandfördervorrichtungen die ein Schlürblech enthalten, die bisher üblichen separaten Längsholme vollständig wegzulassen und statt dessen das Schlürblech selbsttragend auszubilden. Auch diese Bauweise hat sich als kostengünstig erwiesen und es sind die so aufgebauten Bandfördervorrichtungen voll geeignet für den ihnen zugedachten Einsatzbereich. Auch hier ist jedoch die schnelle Lieferfähigkeit dadurch beschränkt, daß das selbsttragende Schlürblech nicht vorgefertigt werden kann, weil die vom Kunden gewünschte Breite unbekannt ist. Eine Vorfertigung könnte nur -was durchaus möglich ist- im Rahmen bestimmter Breitenabstufungen erfolgen. Wird dieser Weg gegangen, erfordert die Lagerung der solcher Art vorgefertigten Teilejedoch einen recht großen Raum und ist damit teuer. Erfolgt die Anfertigung des selbsttragenden Schlürbleches jeweils von Bestellung zu Bestellung, so nimmt die Herstellung doch relativ viel Zeit in Anspruch, weil das Schlürblech ausgeschnitten, an den Rändern gelocht, entgratet und abgekantet werden muß.

Mit der EP-A-123 785, Fig. 7, ist noch ein Rahmen für eine Bandfördervorrichtung bekannt geworden, bei der jeder Längsholm als vertikal angeordneter Steg ausgebildet ist mit zwei rechtwinklig dazu und im Abstand und parallel zueinander angeordneten Horizontalstegen, zwischen denen eine flache Platte angeordnet ist. Diese Längsholme sind verwindungsweich und bieten keinerlei Anpassungsmöglichkeit für eine kleinere Breitenanpassung. Alle Breitenanpassung muß an der flachen Platte erfolgen. Die dünnen Horizontalstege sind außerdem empfindlich gegen Lagerschäden, wie z. B. Einbeulungen. Solche Lagerschäden machen den Holm unbrauchbar, so daß eine Lagerung nur aufwendig oder gar nicht erfolgen kann.

Der Erfindung liegt damit die Aufgabe zugrunde, einen Rahmen für eine Bandfördervorrichtung vorzuschlagen, der sehr schnell und einfach montierbar und demontierbar ist und dessen wesentliche Einzelteile kostengünstig herstellbar sind. Es soll außerdem eine platz sparende Bevorratung der wesentlichen Einzelteile möglich sein, so daß eine genügend große Bevorratung eine schnelle Lieferung selbst größerer Stückzahlen erlaubt.

Diese Aufgabe ist erfindungsgemäß bei einem Rahmen für eine Bandfördervorrichtung der eingangs beschriebenen Art dadurch gelöst, daß jeder Längsholm im Querschnitt mindestens U-förmig angeordnete Schenkel aufweist, mit einem Basissteg und zwei rechtwinklig zueinander parallel und in gegenseitigem Abstand verlaufenden Schenkeln wobei eine Längsnut in die freie Stirnseite eines Schenkels eingebracht ist, zur Aufnahme des Randbereichs eines Schlürblechs. Durch diese Gestaltung der Längsholme kann einerseits eine gewünschte große Tragfähigkeit des gesamten Bandes erreicht werden, wobei alle üblichen Bauteile in bisher bekannter Weise mit diesen Längsholmen verbunden werden können. Zur Befestigung des Schlürbleches bedarf es jedoch in den Längsholmen keines gesonderten abgewinkelten und gelochten Flansches und es muß auch das Schlürblech selbst nicht mehr mit einem abgewinkelten Lochrand versehen werden und es muß nicht mehr Schlürblech und Längsholm an beiden Seiten miteinander verschraubt werden. Das Schlürblech kann vielmehr als einfaches ausgeschnittenes rechteckiges Blech gestaltet sein, das einfach in die genannte Längsnut eines jeden Längsholmes eingeschoben wird. Die Gestaltung der Längsholme kann hierdurch einfacher sein und es wird vor allen Dingen möglich, das Schlürblech als flaches Blech auszubilden. Diese flache Ausbildung ist für eine Bevorratung außerordentlich günstig, da sie sehr wenig Platz einnimmt. Es sind beliebige Breiten eines solchen Schlürbleches außerordentlich schnell herstellbar, weil es sich nur noch um einen flachen Zuschnitt handelt, der nicht mehr anschließend noch gelocht, entgratet und abgewinkelt werden muß. Da alle übrigen Bauteile eines solchen Bandes in bekannter Konstruktion erhalten bleiben und angewendet werden können, werden auch deren Vorteile beibehalten. Es wird hierdurch sogar möglich bei Ersatzlieferung von der bisherigen Bauart auf die neue Bauart überzugehen durch einfachen Austausch der Längsholme und des Schlürbleches. Hierdurch wird auch eine Modernisierung zusammen mit einer Ersatzteillieferung möglich, so daß eine Modernisierung sehr preisgünstig durchgeführt werden kann. Die erfindungsgemäße Gestaltung erlaubt darüber hinaus auch im Anwenderbetrieb eines solchen Bandes eine sehr kostengünstige Montage und Demontage im Rahmen von Reparaturen oder einer üblichen prophylaktischen Instandhaltung. Die Verwendung einer Längsnut statt eines Längsschlitzes sorgt außerdem für eine erheblich bessere Steifigkeit des Schlürbleches. Kleinere Breitenanpassungen können durch Veränderung der Nuttiefen der Längen der U-förmig angeordneten Schenkel erreicht werden. Ein solches U-Profil hat bei relativ geringem Werkstoffaufwand in den entsprechenden Belastungsebenen eine hohe Biegesteifigkeit, so daß ein biegesteifer und dennoch leichter Längsholm materialsparend herstellbar ist. Das U-Profil ist außerdem gut geeignet zur inneren Aufnahme der üblichen Lagerschilde für die Antriebswalzen oder Unlenkwalzen.

Eine alternative Lösung sieht vor, daß jeder Längsholm als Flachprofil ausgebildet ist, wobei mindestens eine Längsnut in die als Innenseite des Rahmens verwendete Flachseite des Längsholmes eingebracht ist, zur Aufnahme des Randbereiches eines Schlürblechs. Die bereits zur ersten Lösung beschriebenen Vorteile werden auch hier erreicht. Zusätzlich wird erreicht, daß bei einer bestimmten Förderbreite die Breite des Rahmens für die Bandfördervorrichtung minimiert werden kann. Diese Ausbildung der Längsholme ist besonders günstig für eine Lagerbevorratung und ebenfalls besonders einfach herstellbar.

Nach einer Ausgestaltung der Erfindung ist vorgeschlagen, daß jeder Längsholm parallel zur Längsnut und im Abstand zu dieser verlaufend eine weitere Längsnut für ein weiteres, parallel zum ersten Schlürblech angeordnetes Schlürblech aufweist. Damit kann ein häufig benötigtes zweites Schlürblech für eine Abstützung des zurücklaufenden Teiles des Förderbandes ebenso günstig verwendet werden. Die Bevorratung zusätzlicher Einzelteile wird hierdurch nicht erforderlich.

Besonders günstig ist es, wie weiter nach der Erfindung vorgeschlagen wird, wenn jeder Längsholm als Leichtmetallstrangpreßprofil ausgebildet ist, in welches die in Längsrichtung verlaufende regelmäßige Lochung nach dem Strangpreßvorgang eingebracht ist. Wird ein Strangpreßprofil verwendet so ist es möglich, die Längsnuten für das Schlürblech im Rahmen der Herstellung des Profils als Strangpreßprofil gleichzeitig miteinzubringen, so daß hierfür ein gesonderter Arbeitsgang vollständig entfallen kann. Als Leichtmetallängsholm ist ein solcher Längsholm zudem besonders gewichtsgünstig. Er kann beispielsweise durch Eloxierung vor weiterer Korrosion geschützt werden und benötigt damit keinen zusätzlichen Anstrich und auch keinen Wiederholungsantrich.

In weiterer Ausgestaltung wird dann nach der Erfindung vorgeschlagen, daß die Tiefe der für das Schlürblech vorgesehenen Auflagefläche der Längsnut deutlich größer ist als die Tiefe der gegenüberliegenden Fläche. Hierdurch wird ein günstigerer Auflagebereich für das Schlürblech geschaffen, wodurch eine weitere Erhöhung der Biegesteifigkeit des Schlürbleches erreicht wird.

Eine andere Ausgestaltung der Erfindung sieht vor, daß die Tiefe der der für das Schlürblech vorgesehenen Auflagefläche gegenüberliegenden Fläche deutlich größer ist als die Tiefe der Auflagefläche. Hierdurch wird ohne Nachteil für die Einsatzfähigkeit des Förderbandes eine erhebliche Montageerleichterung geschaffen. Die Tiefe der Längsnut ist bei einem Strangpreßprofil recht beschränkt. Es können hier nur relativ kleine Nuttiefen erzielt werden. Hierdurch wird der Einschub des Schlürbleches während der Montage erschwert. Während der Montage steht jedoch der gesamte Rahmen auf dem Kopf, so daß dann, wenn die genannte Ausbildung vorhanden ist, eine breite Auflage des Schlürbleches während der Montage erzielt wird, wodurch das Schlürblech einfacher einschiebbar ist.

Ergänzend ist dann noch nach der Erfindung vorgesehen, daß die beiden Schenkel des U-Profils unterschiedlich lang sind. Hierdurch kann sehr einfach eine Anpassung an vom Kunden vorgeschriebene besondere räumliche Gegebenheiten erfolgen.

Nach einer anderen Alternative der Erfindung ist vorgesehen, daß beide Schenkel des U-Profils die Längsnut aufweisen und gleich lang sind. Hierdurch wird eine besonders einfache Ausführung mit zwei Schlürblechen gleicher Abmessung möglich.

Schließlich ist nach der Erfindung noch vorgeschlagen, daß das freie Ende mindestens eines Schenkels des U-Profils eine rechtwinklig hierzu ins Profilinnere sich erstreckende Verlängerung aufweist. Wird eine solche Gestaltung insbesondere als Strangpreßprofil hergestellt, so ist hierzu ein Mehraufwand nicht erforderlich. Gleichzeitig werden jedoch weitere Flächen für irgendwelche Zusatzgeräte nach Kundenforderung geschaffen, ohne daß hierdurch die erfindungsgemäßen Vorteile beeinträchtigt würden. Es wird vielmehr unter Beibehaltung der erfindungsgemäßen Vorteile der Einsatzbereich erweitert.

Die Erfindung soll nun anhand von in den Zeichnungen dargestellten Ausführungsbeispielen näher erläutert werden.

Es zeigen:
- Figur 1: verschiedene Querschnittsformen a-i eines Längsholms
- Figur 2: zwei Längsholme mit dazwischen angebrachtem Schlürblech und Quertraverse als Ausschnittsbruch im Querschnitt
- Figur 3: Seitenansicht nach Figur 2

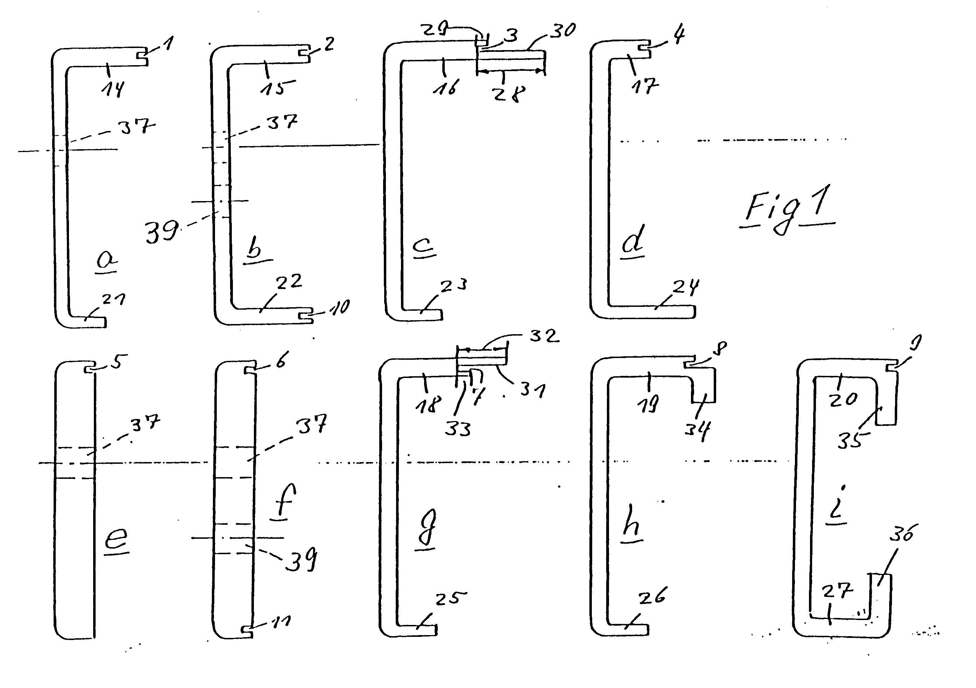

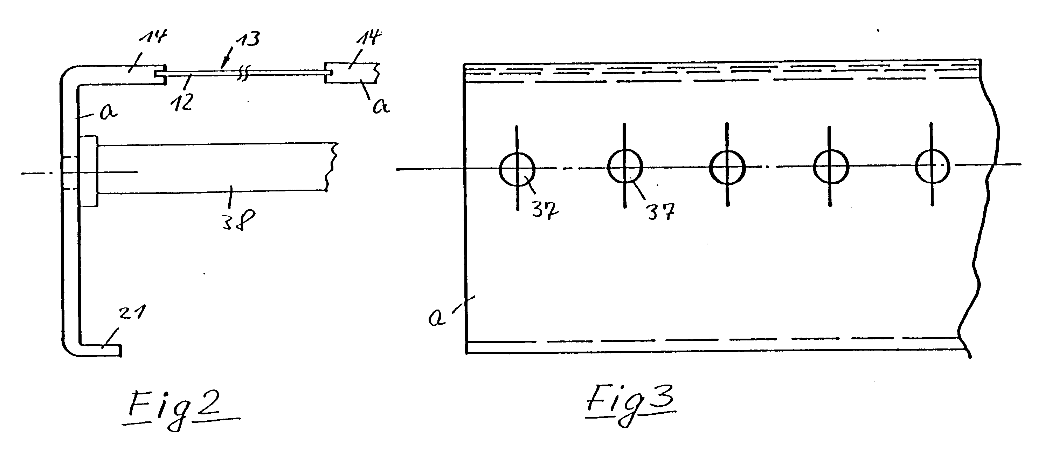

Die Figur 1 zeigt verschiedene Querschnittsformen von Längsholmen für einen Rahmen für eine erfinduangsgemäße Bandfördervorrichtung. Die Ausführungsformen a-d und g zeigen U-Profile, bei denen die freien Schenkel der U-Profile gleichlang oder ungleichlang sind. Die freien Schenkel der U-Profile und die Basis des U können hierbei gleiche oder unterschiedliche Materialstärke aufweisen. So zeigt z.B. das Ausführungsbeispiel nach Figur 1 a ein U-Profil dessen freie Schenkel 14 und 21 unterschiedlich lang sind und unterschiedliche Materialstärke aufweisen. Der freie Schenkel 21 ist hierbei kürzer ausgebildet als der freie Schenkel 14. Der freie Schenkel 14 weist hierbei eine sich von seiner freien Stirnseite her in Richtung des Schenkels etwa mittig zur Schenkeldicke sich erstreckende Längsnut 1 auf, die in ihrer lichten Weite der Dicke eines darin mit seinen Seitenkanten einzuschiebenden Schlürbleches 12 entspricht. Die nicht näher bezeichnete Basis dieses Profils (a) weist hierbei in Längserstreckung und in regelmäßigen Abständen verteilt eine Lochreihe mit den Löchern 37 auf. Ein solches U-Profil (a) kann als Strangpreßprofil ausgebildet sein. Zur Bildung eines Rahmens für eine Bandfördervorrichtung wird ein solches U-Profil auf eine gewünschte Länge abgetrennt. Zwei dieser U-Profile werden dann in spiegelbildlicher Anordnung zueinander so, daß die freien Schenkel gegeneinander gerichtet sind, angeordnet und über bekannte Quertraversen 38 (Figur 2) in üblicher Weise unter Zuhilfenahme der Löcher 37 starr miteinander verbunden. Hiernach kann dann zur Bildung der gewünschten Gleitebene 13 einfach das Schlürblech 12 in die sich nun im gewünschten Abstand gegenüber liegenden Längsnuten 1 eingeschoben werden. Das Schlürblech 12 ist hierbei als einfaches flaches Blech gestaltbar. Irgendwelche Abkantungen oder Bohrungen sind nicht erforderlich. Mit diesen einfachen Maßnahmen ist mit den beschriebenen wenigen Einzelteilen ein im notwendigen Umfang starrer Rahmen für eine Bandfördervorrichtung geschaffen. Die am Längsholm vorhandene Lochreihe mit den Löchern 37 kann nun in üblicher Weise zum Anbau der übrigen noch notwendigen Einzelteile benutzt werden, so daß sich insgesamt im wesentlichen beispielsweise ein Aufbau ergibt, wie er in Figur 1 des DE-G 83 10 752 dargestellt ist. Da dieser Aufbau in seinen Strukturen bereits beschrieben ist, kann hier auf eine erneute Beschreibung verzichtet werden.

Zur Bildung des beschriebenen Förderbandrahmens kann jedoch auch beispielsweise ein U-Profil (b) mit überall gleicher Wandstärke und gleichlangen Schenkeln 15 und 22 in der jeweils beschriebenen Anordnung benutzt werden. Hierbei können beide Schenkel 15 und 22 auch Längsnuten 2 bzw. 10 je zum Einschub eines Schlürbleches 12 tragen. Naturlich ist es auch möglich in die nicht näher bezeichnete Basis des U-Profils (b) eine weitere Lochreihe mit Löchern 39 vorzusehen. Hierbei kann die Lochreihe mit den Löchern 39 auch gegenüber der Lochreihe mit den Löchern 37 versetzt angeordnet sein.

Bei einer Ausführungsform des U-Profils nach (d) ist der untere Schenkel 24 länger als der obere Schenkel 17, der in der beschriebenen Anordnung die Längsnut 4 aufweist. Dies kann dann Vorteile haben, wenn bei insgesamt schmaler Förderbandbreite der Rahmen mittels des Schenkels 24 an einem z.B. kundenseitig vorhandenen Ständer angebracht werden soll.

Bei einer Ausführungsform nach (c) eines U-Profils der Längsholme, ist der untere Schenkel 23 kürzer als der obere Schenkel 16 des U-Profils ausgebildet. Der obere Schenkel 16 trägt hierbei in beschriebener Anordnung die Längsnut 3. Die Längsnut 3 hat hierbei eine übliche Tiefe 29, wie sie problemlos im Strangpreßverfahren hergestellt werden kann. Die hierbei entstehende Auflagefläche 30 für die Auflage des Schlürbleches 12 soll jedoch so vergrößert werden, daß für die Auflagefläche 30 die bedeutend größere Tiefe 28 zur Verfügung steht. Hierdurch wird ingesamt die Steifigkeit des Schlürbleches verbessert.

Die soeben beschriebene Anordnung in umgekehrter Folge ist nach dem U-Profil (g) vorgesehen. Auch dort ist -was jedoch nicht unbedingt so sein muß- der Schenkel 25 kürzer als der Schenkel 18, der darüber hinaus auch noch eine gegenüber dem Schenkel 25 größere Materialstärke aufweist. Der Schenkel 18 trägt hierbei wiederum in beschriebener Anordnung die Längsnut 7, die die Tiefe 33 aufweist. Es ist hier allerdings die der nicht näher bezeichneten schmalen Auflagefläche für das Schlürblech 12 gegenüberliegende Fläche 31 deutlich vergrößert, so daß diese jetzt die Tiefe 32 aufweist. Diese Gestaltung erleichtert deutlich die Montage des Rahmens, weil bei der Montage des Rahmens das Rahmengrundgerüst ohne Schlürblech um gegenüber der Normalanordnung 180^{o} verdreht gehalten wird. Beim Einschub des Schlürbleches 12 kann sich dieses nun auf der Fläche 31, die ja nun recht groß ist, abstützen und wird dabei während des Einführvorgangs sicher geführt. Ein unbeabsichtigtes Herausrutschen des Schlürbleches 12 aus der zugeordneten Längsnut während des Einschiebevorgangs kann damit vermieden werden.

Die Ausführungsformen (h) und (i) zeigen U-Profile mit den Schenkeln 19 und 26 bzw. 20 und 27, bei denen die freien Enden der Schenkel 19 bzw. 20 und 27 eine sich senkrecht hierzu nach innen gerichtete Verlängerung 34 bzw. 35 und 36 aufweisen. Hierbei weisen die Schenkel 19 bzw. 20 wieder in der beschriebenen Anordnung die Längsnuten 8 und 9 auf. Die Verlängerungen 34 bzw. 35 und 36 können ohne nennenswerten Mehraufwand im Strangpreßverfahren ebenfalls hergestellt werden und können hierbei dem Abnehmer eines solchen Förderbandes zur Anbringung weiterer Zusatzteile gewünschter Art dienen.

Besonders einfache Querschnitte der Längsholme zeigen die Ausführungsformen (e) und (f). Es handelt sich hierbei nämlich um ganz einfache Flachprofile, die natürlich auch als Strangpreßprofile herstellbar sind. Es kann sich hierbei um ein ganz einfaches Flachprofil handeln mit nur einer Längsnut 5 und in bereits beschriebener Anordnung mit einer Lochreihe mit den Löchern 37. Auch ein solches Flachprofil (e) kann in spiegelbildlich sich gegenüberliegender Anordnung mittels der Quertraversen 38 starr verbunden werden, so daß ein Schlürblech 12 in die sich nun gegenüberliegenden Längsnuten 5 eingeschoben werden kann, wodurch das Grundgestell des Rahmens fertiggestellt ist.

Ein Flachprofil als Längsholm in der Ausführungsform nach (e) kann natürlich so erweitert werden, daß die Ausführungsform (f) entsteht. Hierzu wird in bereits beschriebener Weise eine zweite Lochreihe mit den Löchern 39 angelegt und parallel zur das Schlürblech 12 aufnehmenden Längsnut 6 eine weitere Längsnut 11 für ein weiteres Schlürblech eingebracht.

## Patentansprüche

1. Rahmen für eine Bandfördervorrichtung mit zwei im Abstand gegenüberliegenden, zueinander parallel verlaufenden Längsholmen, mit mindestens einer von einem zwischen den Längsholmen angeordneten Zwischenstück gebildeten Gleitebene für das Förderband, wobei die Längsholme mittels mindestens einer Quertraverse miteinander verbunden sind und eine in Längsrichtung verlaufende regelmäßige Lochung aufweisen, dadurch gekennzeichnet, daß jeder Längsholm (a-d;g-i) im Querschnitt mindestens U-förmig angeordnete Schenkel aufweist, mit einem Basissteg und zwei rechtwinklig zueinander parallel und in gegenseitigem Abstand verlaufenden Schenkeln (14-20;21-27), wobei eine Längsnut (1-4;7-9) in die freie Stirnseite eines Schenkels (14-20) eingebracht ist, zur Aufnahme des Randbereichs eines Schlürblechs (12).

2. Rahmen für eine Bandfördervorrichtung mitzwei im Abstand gegenüberliegenden, zueinander parallel verlaufenden Längsholmen, mit mindestens einer von einem zwischen den Längsholmen angeordneten Zwischenstück gebildeten Gleitebene für das Förderband, wobei die längsholme mittels mindestens einer Quertraverse miteinander verbunden sind und eine in Längsrichtung verlaufende regelmäßige Lochung aufweisen, dadurch gekennzeichnet, daß jeder Längsholm (e,f) als Flachprofil ausgebildet ist, wobei mindestens eine Längsnut (5,6) in die als Innenseite des Rahmens verwendete Flachseite des Längsholms (e,f) eingebracht ist, zur Aufnahme des Randbereichs eines Schlürblechs (12).

3. Rahmen nach Anspruch 1 oder 2, dadurch gekennzeichnet, daß jeder Längsholm (b, f) parallel zur Längsnut (2,6) und im Abstand zu dieser verlaufend, eine weitere Längsnut (10,11) für ein weiteres, parallel zum ersten Schlürblech (12) angeordnetes Schlürblech aufweist.

4. Rahmen nach einem der Ansprüche 1 bis 3, dadurch gekennzeichnet, daß jeder Längsholm (a-i) als Leichtmetall-Strangpreßprofil ausgebildet ist, in welches die in Längsrichtung verlaufende regelmäßige Lochung nach dem Strangpreßvorgang eingebracht ist.

5. Rahmen nach einem der Ansprüche 1 bis 4, dadurch gekennzeichnet, daß die Tiefe (28) der für das Schlürblech (12) vorgesehenen Anlagefläche (30) der Längsnut (3) deutlich größer ist als die Tiefe (29) der gegenüberliegenden Fläche.

6. Rahmen nach einem der Ansprüche 1 bis 5, dadurch gekennzeichnet, daß die Tiefe (32) der der für das Schlürblech (12) vorgesehenen Auflagefläche gegenüberliegenden Fläche (31) deutlich größer ist als die Tiefe (33) der Auflagefläche.

7. Rahmen nach einem der Ansprüche 1 sowie 3-6, dadurch gekennzeichnet, daß die beiden Schenkel (14,21; 16,23; 17,24; 18,25; 19,26) des U-Profils (a, c, d, g, h, i) unterschiedlich lang sind.

8. Rahmen nach einem der Ansprüche 1 und 3-6, dadurch gekennzeichnet, daß beide Schenkel (15,22) des U-Profils (b) die Längsnut (2,10) aufweisen und gleich lang sind.

9. Rahmen nach einem der Ansprüche 1 und 3-8, dadurch gekennzeichnet, daß das freie Ende mindestens eines Schenkels (19,20,27) des U-Profils (h,i) eine sich rechtwinklig hierzu ins Profilinnere erstreckende Verlängerung (34-36) aufweist.

## Claims

1. Frame for a belt conveyor comprising two spaced, opposing, parallel longerons, at least one glide plane for the conveyor belt formed by an intermediate member arranged between the longerons, wherein the longerons are connected to each other by means of at least one crosspiece and are perforated in a regular manner in the lengthwise direction, characterised in that each longeron (a-d;g-i) has in cross-section at least U-shaped side portions, with a base web and two legs (14-20;21-27) which are in spaced opposing relationship and parallel to each other at right-angles to the base web, wherein a longitudinal groove (1-4;7-9) is provided in the free front face of one leg (14-20) to receive the edge zone of a slide plate (12).

2. Frame for a belt conveyor comprising two spaced, opposing, parallel longerons, at least one glide plane for the conveyor belt formed by an intermediate member arranged between the longerons, wherein the longerons are connected to each other by means of at least one crosspiece and are perforated in a regular manner in the lengthwise direction, characterised in that each longeron (e,f) is a flat section, wherein at least one longitudinal groove (5,6) is provided in the flat side of the longeron (e,f) which is used as the inside of the frame for receiving the edge zone of a slide plate (12).

3. Frame according to claim 1 or 2, characterised in that each longeron (b,f) has a further longitudinal groove (10, 11) extending parallel to the said longitudinal groove (2,6) and spaced therefrom, for receiving a further slide plate which is parallel to the first slide plate (12).

4. Frame according to one of claims 1 to 3, characterised in that each longeron (a-i) is a light metal extruded profile in which the regular perforations extending in its lengthwise direction are made after the extrusion process.

5. Frame according to one of claims 1 to 4, characterised in that the depth (28) of the support surface (30) of the longitudinal groove (3) provided for the slide plate (12) is substantially greater than the depth (29) of the opposing surface.

6. Frame according to one of claims 1 to 5, characterised in that the depth (32) of the surface (31) which lies opposite the support surface provided for the slide plate (12) is substantially greater than the depth (33) of the support surface.

7. Frame according to one of claims 1 and 3 to 6, characterised in that the two legs (14, 21; 16,23; 17, 24; 18, 25; 19, 26) of the U-profile (a,c,d,g,h,i) are of different lengths.

8. Frame according to one of claims 1 and 3 to 6, characterised in that both legs (15, 22) of the U-profile (b) have the longitudinal groove (2, 10) and are of the same length.

9. Frame according to one of claims 1 and 3 to 8, characterised in that the free end of at least one leg (19, 20, 27) of the U-profile (h,i) has an extension (34-36) extending perpendicular to the leg towards the interior of the profile.

## Revendications

1. Châssis pour un dispositif convoyeur à bande comprenant deux longerons s'étendant parallèlement et à distance l'un en face de l'autre, comportant au moins un plan de glissement pour la bande transporteuse, constitué par une pièce intermédiaire disposée entre les longerons, les longerons étant reliés l'un à l'autre par au moins une traverse et perforés à intervalles réguliers dans le sens longitudinal, caractérisé en ce que chaque longeron (a-d; g-i) présente, en coupe transversale, des ailes disposées pour former au moins un U, avec une âme de base et deux ailes (14-20 ; 21-27) s'étendant à angle droit par rapport à celle-ci parallèlement l'une à l'autre et à distance l'une de l'autre, une rainure longitudinale (1-4 ; 7-9) étant pratiquée dans la face frontale libre d'une aile (14-20) Pour recevoir la zone de bord d'une tôle de liaison (12).

2. Châssis pour un dispositif convoyeur à bande comprenant deux longerons s'étendant parallèlement et à distance l'un en face de l'autre, comportant au moins un plan de glissement pour la bande transporteuse, constitué par une pièce intermédiaire disposée entre les longerons, les longerons étant reliés l'un à l'autre par au moins une traverse et perforés à intervalles réguliers dans le sens longitudinal, caractérisé en ce que chaque longeron (e, f) est réalisé sous la forme d'un profilé plat, au moins une rainure longitudinale (5, 6) étant pratiquée, pour recevoir la zone de bord d'une tôle de liaison (12), dans la face plane du longeron (e, f) utilisée comme côté intérieur du châssis.

3. Châssis selon la revendication 1 ou 2, caractérisé en ce que chaque longeron (b, f) présente, parallèlement à la rainure longitudinale (2, 6) et à distance de celle-ci, une autre rainure longitudinale (10, 11) pour une autre tôle de liaison disposée parallèlement à la première tôle de liaison (12).

4. Châssis selon l'une quelconque des revendications 1 à 3, caractérisé en ce que chaque longeron (a-i) est réalisé sous la forme d'un profilé extrudé en métal léger, dans lequel la perforation à intervalles réguliers dans le sens longitudinal est pratiquée après l'opération d'extrusion.

5. Châssis selon l'une quelconque des revendications 1 à 4, caractérisé en ce que la profondeur (28) de la surface d'appui (30) de la rainure longitudinale (3) qui est prévue pour la tôle de liaison (12) est nettement supérieure à la profondeur (29) de la surface opposée.

6. Châssis selon l'une quelconque des revendications 1 à 5, caractérisé en ce que la profondeur (32) de la surface (31) opposée à la surface d'appui prévue pour la tôle de liaison (12) est nettement supérieure à la profondeur (33) de la surface d'appui.

7. Châssis selon l'une quelconque des revendications 1 ainsi que 3 à 6, caractérisé en ce que les deux ailes (14, 21 ; 16, 23 ; 17, 24 ; 18, 25 ; 19, 26) du profilé en U (a, c, d, g, h, i) sont de longueur différente.

8. Châssis selon l'une quelconque des revendications 1 et 3 à 6, caractérisé en ce que les deux ailes (15, 22) du profilé en U (b) présentent chacune une rainure longitudinale (2, 10) et sont de même longueur.

9. Châssis selon l'une quelconque des revendications 1 et 3 à 8, caractérisé en ce que l'extrémité libre d'au moins une aile (19, 20, 27) du profilé en U (h, i) présente un prolongement (34-36) qui s'étend à angle droit avec celle-ci à l'intérieur du profilé.
